(19) Europäisches Patentamt
European Patent Office
Office européen des brevets

(11) Publication number: **0 571 031 A2**

# (12) EUROPEAN PATENT APPLICATION

(21) Application number: **93201391.5**

(51) Int. Cl.$^5$: **A23L 1/227**

(22) Date of filing: **14.05.93**

(30) Priority: **21.05.92 EP 92201458**

(43) Date of publication of application:
**24.11.93 Bulletin 93/47**

(84) Designated Contracting States:
**AT BE CH DE DK ES FR GB IE IT LI NL SE**

(71) Applicant: **OUEST INTERNATIONAL B.V.**
**Huizerstraatweg 28**
**NL-1411 GP Naarden(NL)**

(72) Inventor: **Turksma, Hessel, UNILEVER RES. LAB. VLAARDINGEN**
**Olivier van Noortlaan 120**
**NL-3130 AC Vlaardingen(NL)**

(74) Representative: **Dekker, Enno E.J. et al**
**Unilever N.V.**
**Patents Division**
**P.O. Box 137**
**NL-3130 AC Vlaardingen (NL)**

## (54) Process for the preparation of savoury flavours.

(57) The invention relates to a process for the preparation of a savoury flavour which comprises reacting mono- and/or di-methyl-3(2H)-furanone or precursors thereof with cystein and/or hydrogen sulphide. Suitable precursors of mono- or di-methyl-3(2H)-furanone are oligomers of diacetyl, pyruvic aldehyde, pyruvic acid, acetoin, acetol, ethylene glycol aldehyde and glyceraldehyde, including mixed oligomers. The reaction is preferably carried out with cystein and hydrogen sulphide. The latter may be obtained before or during the reaction from a hydrogen sulphide donor.

The reaction is preferably carried out at pH below 7, at 60-160 °C for 0.5-4 hours. A food grade acid such as acetic acid may be present.

The reaction mixtures obtained are rich in methyl substituted furanthiols or derivatives thereof.

The invention also relates to flavour precursor mixtures which generate a savoury flavour upon heating and comprises a mono- and/or di-methyl-3(2H)-furanone and/or precursor thereof, cystein and optionally a hydrogen sulphide donor.

EP 0 571 031 A2

This invention relates to a process for the preparation of a savoury flavour which comprises a methyl substituted furanthiol and often derivatives thereof by reacting a keto compound with cystein. More in particular the invention relates to methyl substituted furanthiols having one or two methyl substituents in the 2- and/or 5- positions. Processes for the preparation of such savoury flavour mixtures are known in the art. GB-A-1 283 912, which discloses specifically the preparation of a flavouring mixture inter alia comprising 2,5-dimethylfuran-3-thiol by reacting 4-hydroxy-2,5-dimethyl-2,3-dihydrofuranone with hydrogen sulphide. In a similar way 2-methylfuran-3-thiol was prepared by reacting 4-hydroxy-5-methyl-2,3-dihydrofuranone in an aqueous medium with hydrogen sulphide. It is evident that the flavouring mixtures so obtained contain numerous chemical entities such as furanthiols, mercaptofuranones and thiophene compounds in small quantities. GB-A-1 283 913 discloses similar chemical processes, without ,however, identifying the compounds formed. Furthermore there is US-A-4 020 175 which discloses specifically the preparation of the meat flavour mixture by reacting 2-methyl-3-tetrahydrofuranone with hydrogen sulphide, the flavour mixture comprised 2-methylfuran-3-thiol and 2-methyl-[4,5H]dihydrofuran-3-thiol, which were identified by physical methods.

Although these known preparative methods permit the synthesis of interesting savoury mixtures, the methods are not very specific as to forming key meat flavour compounds in sufficient quantities and ratios. E.g. too little of the key compounds such as methyl substituted furanthiol and its disulphide are formed, furanthiolacetate is (virtually) absent whereas often too much thiophene compounds are formed.

The present invention permits the preparation of the key compounds in high yields, moreover by adjusting the reaction conditions the relative ratios of furanthiols, disulfides and furanthiolacetates can be varied. Thus, the present invention aims to avoid the above disadvantages encountered when preparing savoury flavours according to processes known in the art by providing a process in which 2-methyl- and/or 5-methyl- and/or 2,5-dimethyl-3(2H)-furanone (hereinafter collectively referred to as (2)(5)-(di)methyl-3(2H)-furanone) and/or precursors thereof are reacted with cystein and/or hydrogen sulphide. It is preferred to carry out the reaction with cystein and hydrogen sulphide in combination. These mono- and dimethyl-3(2H)-furanones do not carry a hydroxy-group in the 4-position.

According to a preferred embodiment of the invention the (2)(5)-dimethyl-3(2H)-furanone precursor is a compound of the class consisting of oligomers of diacetyl, pyruvic aldehyde, pyruvic acid, acetoin, acetol, ethylene glycol aldehyde and glyceraldehyde, including mixed oligomers. Under "oligomers" are to be understood compounds consisting of up to about 12 (n = 12) monomeric units, e.g. in the case of diacetyl $(H_3C\text{-}CO\text{-}CO\text{-}CH_3)_n$. Oligomers can be obtained by heating a true polymeric material. Some oligomers can be obtained by heating monomeric material e.g. diacetyl in the presence of e.g. acetic acid. The term "oligomers" as used herein comprises compounds made up from a whole number (n) of monomeric units as well as those made up of $n+0.5$ monomeric units, especially when the monomeric unit is mirror symmetric as e.g. in the case of diacetyl $(H_3C\text{-}CO\text{-}CO\text{-}CH_3)$, so that e.g. $(H_3C\text{-}CO\text{-}CO\text{-}CH_3)_{2.5}$ is comprised. This particular compound with the systematic name 2,5-dimethyl-2-(2-hydroxy-3-oxo-2-butyl)-3(2H)-furanone has formula A below.

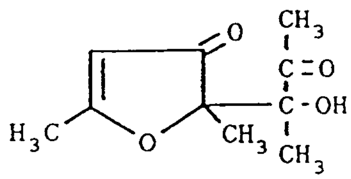

A

It is a preferred precursor of 2,5-dimethyl-3(2H)-furanone and leads to the formation of an excellent savoury flavour when reacted with cystein and/or hydrogen sulphide. Other very suitable precursors are compounds of formulae B and C [(mixed) oligomers of pyruvic aldehyde/(diacetyl)] below.

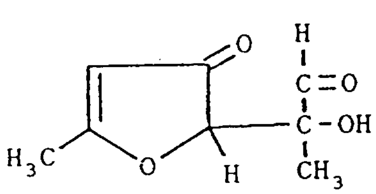

B

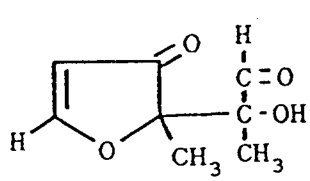

C

In a preferred embodiment of the invention the savoury flavour is formed by reaction of a furanone or its precursor with both cystein and hydrogen sulphide wherein the latter is generated by a hydrogen sulphide donor. Suitable hydrogen sulphide donors can be any organic or inorganic compound which is capable of generating hydrogen sulphide either in the gaseous or nascent form under the reaction conditions. Suitable examples are: peptides containing cystein such as glutathione, cystine, mercaptoaceetamide, thioaceetamide, or salts thereof for example: potassium or sodium salts, hydrochlorides, esters or simple derivatives of other simple derivatives of the sulphur containing compound. Suitable inorganic sulphur containing compounds are sulphides or hydrosulphides of alkali metals, alkaline earth metals or ammonia, such as sodium sulphide, potassium sulphide, ammonium sulphide, calcium sulphide, and the corresponding hydrosulphides. Also other metal sulphides, for example ferrous sulphide may be used. The use of hydrogen sulphide donors obtained from animal, vegetable or microbiological sources is preferred.

In another preferred embodiment of the invention the molar ratio furanone (or precursor) : cystein : hydrogen sulphide available for reaction is within the range 1 : 5 - 15 : 0 - 10, preferably within 1 : 7 - 9 : 3 - 5.

In order to obtain higher yields of flavour compounds the process according to the present invention is preferably carried out in a medium comprising a polar solvent, preferably an organic polar solvent. In an aqueous medium usually lower yields are obtained than in a polar organic medium. As the presence of water may negatively affect the yield the present reaction medium contains preferably less than 20%, more preferably less than 5% of water. Many organic polar solvents are suitable in principle, but preferred are those which presence is allowed in foods by the various food regulations, such as propylene glycol or glycerol. Commercial grades thereof often contain about 1% of water and can be used as such.

Preferably the process is carried out at a pH below 7, preferably from 2 to 6. The pH of the reaction mixture is conveniently determined after adding 90% (w.w.) of water to 10% of the organic polar medium. Usually the pH of the reaction medium increases somewhat as the reaction proceeds.

The process according to the present invention is preferably carried out at a temperature between 60 and 160°C for 0.5 to 4 hours, preferably between 90 and 120°C for 1 to 3 hours. The use of higher reaction temperatures tends to lead to savoury flavours with a roast meat note, whereas those prepared at a lower temperature tends to lead to a more sweet meaty note.

The process according to the present invention is preferably carried out in an autoclave at superatmospheric pressure, preferably from 100 to 2.500 Kpa, optionally in the presence of air. The use of an autoclave is convenient, especially when using hydrogen sulphide and it may be desirable to effect some air oxidation as to form the corresponding disulfides.

Thioesters such as acetates of the furan-3-thiols are often more stable than the corresponding free thiols and therefore the reaction is conveniently carried out in the presence of a food acid, such as acetic acid.

In another embodiment of the invention there is provided a flavour precursor mixture, generating a savoury flavour upon heating, and comprising a (2)(5)-(di)methyl-3(2H)-furanone and/or precursor thereof, cystein and optionally a hydrogen sulphide donor. Such flavour precursor mixtures are very useful because the flavour is developed upon heating of the foodstuff to which the precursor mixture is added. Such heating is often done only a few minutes before the foodstuff is ingested so that flavour degeneration and flavour losses are kept to a minimum. However, when aqueous systems are involved lower conversions into flavour compounds may occur and an appropriately higher level of the flavour precursor mixture may be required. The use of such flavour precursor mixture can also be useful in dry soup mixes and canned meat products, where the flavour is developed upon sterilizing the closed cans. Sometimes it is advantageous to already heat the flavour precursor mixture under mild conditions before incorporating the it in a foodstuff; some of the precursor mixture is then already converted into flavour compounds and at the same time flavour precursor mixture is still present to develop the full flavour at a later stage.

According to a further embodiment of the invention there is provided a flavour precursor mixture in which the (2)(5)-(di)methyl-3(2H)-furanone precursor is a compound of the class consisting of oligomers of diacetyl, pyruvic aldehyde, pyruvic acid, acetoin, acetol, ethylene glycol aldehyde and glyceraldehyde including mixed oligomers thereof. Further details on furanone and its precursors are given above.

Thus, the present invention provides a flavour precursor mixture in which the 2,5-dimethyl-3(2H)-furanone precursor is an oligomer of diacetyl. The term oligomer is discussed in some detail above. Further, the present invention also provides a flavour precursor mixture which comprises furanone, cystein and a hydrogen sulphide donor in a medium comprising a polar organic solvent at a pH below 7, preferably at a pH between 2 and 6. The best way to determine the pH values has been discussed above. Especially when aiming at savoury flavours containing appreciable amounts of stable thioacetates or other thioesters it is useful to incorporate in the mixture a larger amount of acetic acid or other food acid. Also, the

incorporation of phosphoric acid often facilitates the formation of the flavour compounds.

The flavours and flavour precursor mixtures according to the invention may be added to products to be flavoured, either as such, or as part of a flavouring composition. The term flavouring composition as used herein means a mixture of flavours or flavour components, if desired dissolved in a suitable solvent or mixed with a powdered substrate or carrier or processed to form a powdered product. Such flavouring composition is used to impart a flavour impression to a product or to improve or alter the flavour impression a product already has.

Thus, in a further embodiment of the invention there is provided a flavouring composition comprising flavours and flavour components known in the art and in addition one or more flavours obtained by the process of the invention and/or flavour precursor mixtures according to the invention.

Examples of products the flavour precursor mixtures according to the invention may be added to, either as such or as part of a flavour composition, are ingredient mixes for products which are prepared by extrusion, frying or baking.

Flavours or flavour components which may be advantageously combined with the flavours or flavour precursor mixtures according to the invention into flavouring compositions are: natural products such as extracts, essential oils, absolutes, resins, concretes, fruit juices, etc., but also synthetic components such as hydrocarbons, alcohols, aldehydes, ketones, esters, ethers, acetals, ketals, acids, etc., including saturated and unsaturated compounds, aliphatic, alicyclic and heterocyclic compounds. Such flavour components are mentioned, for example, in S. Arctander, Perfume and Flavor Chemicals (Montclair, N.J., 1969), in S. Arctander, Perfume and Flavor Materials of Natural Origin (Elizabeth, N.J., 1960), in T.E. Furia et al., CRC Fenaroli's Handbook of Flavor Ingredients, 2nd edition (Cleveland, CRC Press Inc., 1975), H.B. Heath, Source Book of Flavours, The Avi Publishing Co. Inc. Westport, Connecticut (1981) and in "Flavor and Fragrance Materials - 1989", Allured Publishing Co. Wheaton, Ill. USA.

Auxiliary substances and solvents which can be used in flavouring compositions containing the flavours and flavour precursor mixtures according to the invention are, for example: ethanol, isopropanol, diethyleneglycol monoethyl ether, glycerol, triacetin etc. Powdered substrates or carriers may include salt, starch derivatives and the like. Processing into a powdered product may include spray-drying and other techniques of micro-encapsulation.

The invention is illustrated by the following examples, which are not limiting.

Example 1

A solution containing 127 mmol/kg diacetyloligomer (prepared according to EP-A-0293957 Example 1, which is hereby incorporated by reference) in glycerol and 400 mmol cysteine (97%, ex Aldrich) was stirred for 2 hours in a round bottomed, open flask, supplied with a Dimroth condensor, at 120 °C. The reaction mixture was extracted according to the method outlined in Proc. Am. Soc. Bre. Chem. 5, (1964). 7.2 gram of the crude reaction mixture is added to about 70 ml water. This mixture is extracted by means of a mini Likens Nickerson extraction unit (ex. Chrompack) in 2 ml dichloromethane.

Extraction conditions:

| | |
|---|---|
| Solvent<br>Cooling cold finger<br>Temperature oil bath solvent<br>Controlunit heating mantle | dichloromethane 2 ml<br>-1 °C using a cryostate<br>70 °C<br>position 3 |
| Extraction time | 5 min. 'initial' reflux solvent<br>240 min. extrac<br>20 min. 'post' reflux solvent |

To the dichloromethane extract of the reaction mixture $C_{12}$-methylester has been added as an internal standard to determine quantitatively the amount of sulfur compounds formed.

The main compounds which were expected in the reaction mixture starting from the diacetyl oligomer are: 2,5-dimethyl-furan-3-thiol, 2,5-dimethyl-3-(2H)-furanone and 2,5-dimethyl-furan-3-thioacetate.

Recoveries of the compounds involved have been determined using model substances.

The dichloromethane extract obtained was analyzed by gaschromatography using the following conditions:

| | |
|---|---|
| GLC:<br>Column:<br>Temperature:<br>Detection: | Hewlett Packard 5890 series II<br>50 m. WCOT CP wax 52 CB, i.d. = 0.32 mm.<br>50 - 225 °C/3 °C per min.<br>FID and FPD |

Because sulfur containing compounds have a very low response with a FID detector a single flame photometric detector (FPD) (HP accessory 19256A) was sometimes applied which is very sensitive to S. The column effluent was simultaneously split to the two detectors using a splitter at the end of the GLC column.

To determine the yields of the S compounds the response factors of standard thiols have been determined applying the FPD detector, using the $C_{12}$-methylester, of which the amount was determined by FID, as internal standard. It turned out that the response signal of the FPD depends on the area of the GLC peak. Using standard thiols the correlation between the response factor and the peak area has been determined. The response factor was found to increase exponentially in the region of small peak areas. For the calculation of the yields a linear plot of 1/log(area/10000) vs. the response factor was used. In the experiments, generally large peak areas of the thiols have been obtained. Identification of the flavour compounds formed in the various reactions have been carried out by mass spectroscopy using the same type GLC stationary phase as described above coupled to a EI mass spectrometer. The following MS conditions were used:

| | |
|---|---|
| scan range: 30-250 m/z<br>scan range: 30-350 m/z<br>ionization: EI | scanspeed: 0.97 scansec.$^{-1}$<br>scanspeed: 1.12 scansec.$^{-1}$<br>electron energy: 70 eV |

The following GLC conditions were used:

| | |
|---|---|
| Column:<br>Inj. type:<br>Gas flow:<br>Inj. temp:<br>Oven program: | 50 m. CP wax 52 CB, df = 0.2, i.d. = 0.22 mm, carrier gas He<br>splitless<br>2 ml/min, purge time off 30 sec.<br>225 °C<br>50 °C (3 min)-225 °C (20 min)/3 °C per min |

By means of HPLC it was also possible to follow the decrease of the diacetyl oligomer. HPLC analysis revealed, that the diacetyloligomer consists of 3 stereo isomers.

The yields of several key flavour compounds in the reaction mixture obtained are given in Table 1 below.

| | mmol/kg reaction product | yield (%) |
|---|---|---|
| 2,5-dimethyl-furan-3-thiol | 6 | 5 |
| 2,5-dimethyl-3-(2H)-furanone | 78 | |
| 2,5-dimethyl-furan-3-thioacetate | 0.4 | 0.4 |

Flavour descriptions of various compounds are given below:

| | |
|---|---|
| 2-methyl-3-furanthiol<br>2,5-dimethyl-3-furanthiol<br>bis-(2-methyl-3-furyl)disulfid<br>bis-(2,5-dimethyl-3-furyl)disulfide | sweet meat, beef broth, HVP like roasted meat aroma<br>strong meaty taste, roasted meat aroma<br>meat fullness, cooked meat aroma<br>meaty taste and aroma |

Examples 2 - 5

Increasing the ratio cysteine/diacetyloligomer, at a reaction temperature of 140°C and keeping other process variables constant results in an increase of the 2,5-dimethyl-furan-3-thiol yield as can be seen from Table 2 below.

| | Ratio cysteine/oligomer | | | |
|---|---|---|---|---|
| | 1:5 | 1:1 | 5:1 | 10:1 |
| YIELD COMPOUNDS | | | | |
| 2,5-dimethyl-furan-3-thiol | 0.01 | 0.3 | 1.4 | 7.5 |

Examples 6 - 10

Higher yields of the thiol could be obtained in an autoclave by using free hydrogen sulfide. Various amounts of reactants under several circumstances have been applied to increase the thiol yield (see Tables 3A and 3B). An autoclave with a contents of 300 ml has been used during all the experiments. The ingredients have been weighed (for amounts see Table 3A in the autoclave, the solvent was added last.

After the autoclave was closed the total mixture was stirred and the oxygen was removed by flushing with nitrogen after which the hydrogensulfide gas was added to the autoclave. Maximally 3-4 gram of the gas was added. The amount of gas was determined by weighing back the gascylinder. After addition of the hydrogen sulfide the autoclave was heated to the reaction temperature desired. (120°). $H_2S$ was obtained by heating cysteine under mild conditions in an inert solvent. During the reaction samples of the reaction mixture were taken from the autoclave to determine the formation of the flavour compounds by GLC by the procedure of Example 1. The pH of the reaction mixture was determined by measuring the pH of 10% solution of the crude reaction mixture in water.

The starting materials used are set out in table 3A and the contents of the reaction mixture in table 3B below:

Table 3A

| mmol/kg | 6 | 7 | 8 | 9 | 10 |
|---|---|---|---|---|---|
| Diacetyloligomer | 128 | 129 | 125 | | 125 |
| Cysteine | 495 | 997 | 967 | 965 | 970 |
| Hydrogen sulfide | | | 428 | 428 | 430 |
| 2,5-dimethyl-3(2H)-furanone | | | | 130 | |
| Phosphoric acid (85%) | | | | | 127 |

Table 3B:

| | REACTION TIME (HOURS) | | | | |
|---|---|---|---|---|---|
| | 0.5 | 1 | 2 | 3 | 4 |
| | | MMOL/KG | | | |
| Example 6: | | | | | |
| 2,5-dimethyl-3(2H)-furanone | | 96.9 | 90.2 | 76.9 | 55.5 |
| 2,5-dimethyl-furan-3-thiol | | 8.4 (yield 6.6%) | 8.3 | 5.9 | 4.7 |
| Example 7: | | | | | |
| 2,5-dimethyl-3(2H)-furanone | 97 | 60 | 59 | 38.7 | |
| 2,5-dimethyl-furan-3-thiol | 2.6 | 14.5 | 17.6 (yield 13.6%) | 10.3 | |
| Example 8: | | | | | |
| 2,5-dimethyl-3(2H)-furanone | | 70.7 | 67.7 | 44 | 29 |
| 2,5-dimethyl-furan-3-thiol | | 39.4 (yield 31.7%) | 31.1 | 22.6 | 12.1 |
| Example 9: | | | | | |
| 2,5-dimethyl-3(2H)-furanone | | 105 | 81.8 | 54.9 | 43.8 |
| 2,5-dimethyl-furan-3-thiol | | 2.9 | 8.7 | 12.2 (yield 9.4%) | 10.5 |
| Example 10: | | | | | |
| 2,5-dimethyl-3(2H)-furanone | | 58.7 | 57.6 | 35.6 | |
| 2,5-dimethyl-furan-3-thiol | | 36.3 | 39.5 (yield 31.6%) | 22.8 | |

The "furanone" concentration is determined by GLC after Likens Nickerson extraction, which means that the given data represent the sum of the concentration of the diacetyloligomer and the furanone actually present in the reaction mixture. When using HPLC the oligomer and the furanone can be distinguished.

Examples 11, 12 and 13.

The presence of oxygen or air results in the oxidation of the thiol formed to the corresponding disulfides viz. bis-(2,5-dimethyl-3-furyl)disulfide. Table 4 below illustrates the influence of air/nitrogen on the yield of several flavour compounds formed in a reaction between the diacetyloligomer and cysteine (1:5), at 140 °C, 1 hour. Disulfides formed are also important meat flavour compounds. If the reaction is carried out under nitrogen no disulfides are found.

Table 4

| | Open system | Extra air inlet | Nitrogen |
|---|---|---|---|
| Yield compounds (%) | | | |
| 2,5-dimethyl-furan-3-thiol | 1.4 | 0.5 @ | 1.3 |

@ Disulfide is formed.

Examples 14 and 15

When acetic acid is used in the reaction, the yield of the 2,5-dimethyl-3-thioacetoxyfuran is increased. This substance is also an important meat flavour compound. It is obvious that dependent on the reaction conditions and the reactants the nature and/or the ratio of the flavour compounds can be influenced.

The reactions have been carried out in a 300 ml autoclave at 120 °C. during two hours. The extraction method and the analysis have been described above.

The reactants and composition of the reaction products are given in Table 5.

Table 5

| | mmol/kg | | mmol/kg | |
|---|---|---|---|---|
| Diacetyloligomer<br>Cysteine<br>Acetic acid | 128<br>495 | | 127<br>494<br>41 | |
| Yield | | | | |
| 2,5-dimethyl-3(2H)-furanone | 90.2 | | 82.4 | |
| 2,5-dimethyl-furan-3-thiol | 8.3 | | 8.7 | |
| 2,5-dimethyl-furan-3-thioacetate | 0.3 | (0,2%) | 0.5 | (0,4%) |

## Claims

1. A process for the preparation of a savoury flavour which comprises a methyl substituted furanthiol and derivatives thereof by reacting a keto compound with cystein wherein a (2)(5)-(di)methyl-3(2H)-furanone

or precursor thereof is reacted with cystein and/or hydrogen sulphide.

**2.** A process as claimed in claim 1 wherein the (2)(5)-dimethyl-3(2H)-furanone precursor is a compound of the class consisting of oligomers of diacetyl, pyruvic aldehyde, pyruvic acid, acetoin, acetol, ethylene glycol aldehyde and glyceraldehyde including mixed oligomers.

**3.** A process according to claim 1 or 2 wherein the 2,5-dimethyl-3(2H)-furanone precursor is an oligomer of diacetyl.

**4.** A process according to claim 1, 2 or 3 wherein the reaction is carried out between furanone (or precursor thereof) with both cystein and hydrogen sulphide .

**5.** A process according to claim 4 wherein the molar ratio furanone/precursor : cystein : hydrogen sulphide is within the range 1 : 5 - 15 : 0 - 10, preferably within the range 1 : 7 - 9 : 3 - 5.

**6.** A process according to any of the claims 1 - 5 wherein the reaction is carried out in a polar medium, preferably a polar organic medium, preferably containing less than 5 % (w.w.) of water.

**7.** A process according to any of the claims 1 - 6 wherein the reaction is carried out at a pH below 7, preferably from 2 to 6.

**8.** A process according to any of the claims 1 - 7 wherein the reaction is carried out at a temperature between 60 and 160 ° C for 0.5 to 4 hours, preferably between 90 and 120 ° C for 1 to 3 hours.

**9.** A process according to any of the claims 1 - 8 wherein the reaction is carried out in an autoclave at superatmospheric pressure, preferably from 100 to 2.500 KPa, optionally in the presence of air or oxygen.

**10.** A process according to any of the claims 1 - 9 wherein the reaction is carried out in the presence of a food acid, preferably acetic acid.

**11.** A flavour precursor mixture generating a savoury flavour upon heating which comprises a (2)(5)-(di)-methyl-3(2H)-furanoneand/or precursor thereof, cystein and optionally a hydrogen sulphide donor.

**12.** A flavour precursor mixture as claimed in claim 11 wherein the (2)(5)-dimethyl-3(2H)-furanone precursor is a compound of class consisting of oligomers of diacetyl, pyruvic aldehyde, pyruvic acid, acetoin, acetol, ethylene glycol aldehyde and glyceraldehyde including mixed oligomers.

**13.** A flavour precursor mixture according to any of the claims 11 - 12 wherein the precursor of 2,5-dimethyl-3-(2H)-furanone) is an oligomer of diacetyl.

**14.** A flavour precursor mixture according to claim 13 wherein the precursor of 2,5-dimethyl-3-(2H)-furanone) is 2,5-dimethyl-2-(2-hydroxy-3-oxo-2-butyl)-3(2H)-furanone.

**15.** A flavour precursor mixture according to any of the claims 10 to 14 which comprises a food acid, preferably acetic acid.

**16.** A flavouring composition comprising flavours and flavour components known in the art and in addition thereto one or more flavours obtained by the process of any one of claims 1 - 10 and/or flavour precursor mixture according to any one of claims 11 - 15.